(19) Europäisches Patentamt
European Patent Office
Office européen des brevets

(11) **EP 1 960 746 B1**

(12) **EUROPÄISCHE PATENTSCHRIFT**

(45) Veröffentlichungstag und Bekanntmachung des Hinweises auf die Patenterteilung:
**04.03.2015   Patentblatt 2015/10**

(51) Int Cl.:
***B65B 1/32*** *(2006.01)*      ***G01G 17/00*** *(2006.01)*

(21) Anmeldenummer: **06828662.4**

(22) Anmeldetag: **12.12.2006**

(86) Internationale Anmeldenummer:
**PCT/DE2006/002225**

(87) Internationale Veröffentlichungsnummer:
**WO 2007/076794 (12.07.2007 Gazette 2007/28)**

(54) **WÄGESTATION MIT FÖRDERELEMENT**

WEIGHING STATION HAVING A CONVEYING ELEMENT

POSTE DE PESAGE DOTE D'UN ELEMENT DE TRANSPORT

(84) Benannte Vertragsstaaten:
**CH DE GB IT LI SE**

(30) Priorität: **15.12.2005   DE 102005060039**

(43) Veröffentlichungstag der Anmeldung:
**27.08.2008   Patentblatt 2008/35**

(73) Patentinhaber: **Wipotec Wiege- und Positioniersysteme GmbH 67657 Kaiserslautern (DE)**

(72) Erfinder: **DÜPPRE, Theo 67663 Kaiserslautern (DE)**

(74) Vertreter: **Mischung, Ralf Eder & Schieschke Patentanwälte Elisabethstraße 34/II 80796 München (DE)**

(56) Entgegenhaltungen:
**EP-A1- 0 501 208      FR-A- 2 147 983 FR-A1- 2 410 262**

**Beschreibung**

Die vorliegende Erfindung betrifft eine Wägestation zum Wiegen und Sortieren von zu wiegenden Körpern, wobei die Körper nach oder während des Wiegevorgangs weiter-zuführen sind.

Aus der Wägetechnik ist es bekannt, innerhalb von Produktionsprozessen die hergestellten Produkte bzw. Körper hinsichtlich ihres Gewichts zu überprüfen, also zu wiegen. Dabei soll der Wiegevorgang einerseits von möglichst kurzer Dauer sein, andererseits werden hohe Anforderungen an die Genauigkeit des Wiegeergebnisses gestellt. Insbesondere im Bereich der Tabletten- bzw. Kapselproduktion wird mit hohen Durchsatzraten produziert, wobei gleichzeitig hohe Anforderungen an die Genauigkeit des Gewichts jeder einzelnen Tablette bzw. Kapsel (allgemein: "Körper") gestellt werden.

Aus der DE 198 19 395 C1 ist eine Vorrichtung zum Wiegen von Hartgelatinekapseln bekannt, bei der mittels einer Förderklinke und einem Flügelrad Kapseln einzeln einem Wiegebereich zugeführt und daraus abgeführt werden. Der konstruktive Aufwand ist hier sehr hoch und die Vorrichtung speziell für bestimmte Kapselformen ausgebildet.

Aus der DE 44 19 488 A1 ist eine weitere Vorrichtung zum Wiegen von Hartgelatine-kapseln bekannt, wobei die zu wiegenden Güter durch eine Übergabevorrichtung einem Wiegebereich zugeführt und dort auf die gewogene Lagerplatte fallen gelassen werden. Ein Schwerikglied trennt die Körper dafür von der Übergabevorrichtung ab. Auch hier ist der konstruktive Aufwand recht hoch und die Führung bzw. Förderung der Kapseln stark formabhängig.

Die DE 697 20 886 T1 beschreibt ein Gewichtsmessgerät von Kapseln, welches u.a. einen Schiebetransfermechanismus, einen Wiegemechanismus und einen Abgabemechanismus umfasst, und somit ebenfalls aufwändig gestaltet und von der Form der Kapseln abhängig ist.

Die US 6,877,611 lehrt einen Transportmechanismus für Kapseln, die einer Wiegevorrichtung zu- und von dort abgeführt werden. Auch hier bestimmen die Kapseln die komplexe und streng formatgebundene Konstruktion der Vorrichtung.

Die JP 3-282221 zeigt einen Wägemechanismus mit horizontal angeordneten Fördertrommeln zum schwerkraftbestimmten Sortieren gewogener Güter.

Aus der EP 0501208 B1 ist schließlich eine Wiegevorrichtung bekannt, bei der ein Zuführungsmechanismus die zu wiegenden Güter einer Wiegeposition gezielt zu- und von dort wieder abführt.

Aus der FR 2.147.983 ist eine Wägeeinrichtung für bandgeförderte Serienerzeugnisse bekannt. Diese Erzeugnisse (insbesondere Flaschen) gelangen von einem Förderband auf einen Drehtisch, um während der Rotation des Drehtisches gewogen zu werden. An einer der Zuführung des Drehtisches gegenüberliegenden Seite werden die Flaschen mithilfe einer Ableitvorrichtung auf ein weiterführendes Förderband aufgeschoben. Diese Vorrichtung ist für das schnelle Fördern und insbesondere das Sortieren der zu wiegenden Gegenstände nicht geeignet.

Die FR 2.410.262 beschreibt eine zwischen zwei winklig zueinander angeordneten Transportbändern vorgesehene Wägevorrichtung. Ein beide Transportbänder überstreichendes Förderband fördert dabei vom einem Transportband zugeführte Elemente über einen Wägetisch auf das abführende andere Transportband. Eine besonders kompakte und einfache Handhabung der zu wiegenden Güter ist damit ebenso wenig möglich wie deren Sortierung.

Alle der vorgenannten Vorrichtungen sind konstruktiv aufwendig und hinsichtlich ihrer Wiegedauer für die einzelnen Körper nicht zufriedenstellend schnell.

Aufgabe der Erfindung ist es daher, eine Wägestation anzubieten, mit der die zu wiegenden Körper sehr schnell gewogen und weiter gefördert werden, wobei die Wägestation unabhängig vom Format der zu wiegenden Körper verwendbar und darüber hinaus konstruktiv einfach gestaltet sein soll.

Die Aufgabe wird gelöst durch eine Wägestation nach Anspruch 1.

Die Erfindung geht von der Erkenntnis aus, dass für eine Wägestation vorteilhaft ein Förderelement vorzusehen ist, welches für die Weiterförderung eines gewogenen Körpers Verwendung findet. Dieses Förderelement ist um eine Achse rotierbar und weist eine Anzahl von Segmentbereichen um die Achse herum auf, so dass der zu wiegende Körper beim Wiegen in einem solchen Segmentbereich auf einem Auflageelement zu liegen kommt. Das Auflageelement, welches auf einem Lastaufnehmer ruht, überträgt dabei die Gewichtskraft des aufliegenden und zu wiegenden Körpers in den Lastaufnehmer. Der Lastaufnehmer erfasst dabei Gewichtskräfte in Richtung einer Lasteinleitungsrichtung, die üblicherweise vertikal verläuft.

Erfindungsgemäß ist das Förderelement zur Weiterförderung eines Körpers nach oder während des Wiegevorgangs ausgebildet, indem es in einem Förderschritt um einen vorgebbaren Drehwinkel $\alpha$ um seine Achse rotierbar ist.. Dabei wird der Körper von dem Segmentbereich des Förderelements so umfasst, dass dieses durch Rotation um seine Achse den Körper weiterbewegt.

Erfindungsgemäß ist die Achse des Förderelements unter einem Winkel $\beta < 90°$ zur Lasteinleitungsrichtung angeordnet. Daraus ergibt sich der Vorteil, dass Förderkräfte, die beim Weitertransport des Körpers durch das Förderelement auf diesen einwirken, nur zu einem Teil oder gar nicht in Lasteinleitungsrichtung wirken. Dadurch wird der Lastaufnehmer mit geringeren oder ohne Störgrößen beaufschlagt, die durch den Weitertransport der Körper von der Auflagefläche weg entstehen können, da zumindest ein Anteil dieser Förderkraft dann senkrecht zur Lasteinleitungsrichtung wirkt und den Lastaufnehmer daher nicht beaufschlagt.

Weiterhin ist das Förderelement so ausgebildet, dass es den Körper bei der Weiterförderung wahlweise in wenigstens zwei verschiedene Abführbereiche fördern, d.h. sortieren kann. Ein erster Bereich kann dabei für die Aufnahme von solchen Körpern gedacht sein, die ein bestimmtes Wiegekriterium erfüllen, während ein weiterer Bereich für diejenigen Körper vorgesehen sein kann, für die dies nicht gilt. Auf diese Weise lässt sich vorteilhaft mit der Weiterförderung jedes gewogenen Körpers ein Sortieren bzw. Aussortieren dahingehend vornehmen, dass das Förderelement nach vorgebbaren Kriterien die Körper dem einen oder anderen Abführbereich zuführt. In beiden Fällen erfolgt die Weiterförderung durch Rotation des Förderelements um seine Achse. Eine derart kompakte Wägestation beinhaltet damit vorteilhaft auf relativ engem Raum die Funktionen des Wiegens und des Aussortierens, ohne dass letzterer Schritt in einem nachge-ordneten Prozess durchzuführen wäre. Nur diejenigen Körper verlassen die Wägestation in den ersten Abführbereich, die bestimmte Gewichtskriterien erfüllen, während die anderen Körper noch innerhalb der Wägestation davon aussortiert werden. Dies vereinfacht und beschleunigt das Produktionsverfahren weiterhin

Ein solcher Aufbau erlaubt das besonders einfache, genaue und schnelle Wiegen von weitgehend beliebig geformten Körpern sowie deren nachfolgende oder auch gleichzeitige Weiterförderung durch Rotation des Förderelements. Weiterhin erfolgt die Förderung des gewogenen Körpers durch das Förderelement nur zu einem Teil oder gar nicht in Richtung der Lasteinleitung, so dass aus der Weiterförderung geringere oder gar keine Störkräfte in diese Richtung auftreten können.

Wird der Winkel $\beta = 0$ gewählt, dann liegen Achse und Lasteinleitungsrichtung parallel. In diesem Fall erfolgt die Weiterförderung ausschließlich durch Kräfte, die senkrecht zur Lasteinleitungsrichtung verlaufen und somit gar nicht auf den Lastaufnehmer einwirken. Dadurch ist das Messergebnis bestmöglich gegen solche Störeinflüsse geschützt.

Eine weitere vorteilhafte Ausführungsform der Erfindung sieht vor, dass jeweils ein Segmentbereich bei der Weiterförderung den Bereich des Auflageelements, in dem der zu wiegende Körper aufliegt, überstreicht. Das Förderelement bewegt sich also relativ zum Auflageelement und bewegt beim Überstreichen des vorbeschriebenen Bereichs den darin angeordneten Körper von dem Auflageelement fort. Dabei kann das Überstreichen berührungslos gegenüber dem Auflageelement erfolgen. Das ist insbesondere dann sinnvoll, wenn das Förderelement lösgelöst vom Auflageelement ausgebildet und nicht vom Lastaufnehmer mitgewogen wird bzw. auf diesem ruht. In diesem Fall sollte es keine Kräfte in Lasteinleitungsrichtung verursachen. Andernfalls (wenn Auflageelement und Förderelement gemeinsam von dem Lastaufnehmer getragen werden) ist auch die Verwendung von Mitnehmerbürsten o.ä. denkbar, die das Auflageelement dann auch berühren können.

Eine besonders vorteilhafte Ausführungsform der Erfindung sieht vor, dass die Segmentbereiche des Förderelements so um dessen Achse angeordnet sind, dass nach einem erfolgten Förderschritt ein anderer, vorzugsweise ein benachbarter Segmentbereich zur Weiterförderung des nächsten Körpers bereitsteht. Das bedeutet, dass durch die Rotation des Förderelements der Sektor, in dem der aktuell gewogene Körper angeordnet ist, um den Drehwinkel $\alpha$ um die Achse herumgeschwenkt wird, so dass ein anderer Segmentbereich nunmehr die Aufnahme des nächsten zu wiegenden Körpers bildet. Die Weiterförderung kann also vorteilhaft in einem quasi-kontinuierlichen Vorgang erfolgen, ohne dass das Förderelement für die Förderung jedes einzelnen Körpers eine Vorund Zurückbewegung ausführen müsste. Allein die Drehung des Förderelements um den Winkel $\alpha$ bewirkt einerseits die Weiterförderung des von diesem umfassten Körpers und andererseits die gleichzeitige Bereitstellung eines neuen Segmentbereichs, ohne dass hierzu eine separate Bewegung erforderlich wäre. Dies beschleunigt den Wiege-und Förderprozess erheblich.

Eine besonders vorteilhafte Ausführungsform sieht dazu vor, dass die Segmentbereiche gleichmäßig um die Achse angeordnet sind und weiterhin der Drehwinkel $\alpha$ durch die Anzahl n aller Segmentbereiche definiert wird nach der Formel:

$$\alpha = 360°/n$$

In diesem Fall entspricht der Drehwinkel demjenigen Winkel, den jeder Segmentbereich relativ zur Achse des Förderelements definiert. Daraus folgt weiterhin, dass nach erfolgter Weiterförderung eines Körpers ein unmittelbar benachbarter Segmentbereich für die Aufnahme des nächsten zu wiegenden Körpers bereitsteht. Dies verringert vorteilhaft den erforderlichen Drehwinkel $\alpha$ auf ein Minimum und spart damit Zeit.

Im einfachsten Fall sind nur zwei Segmentbereiche vorgesehen, die einander zur Achse symmetrisch gegenüberliegen. Durch Rotation des Förderelements um 180° wird dabei der jeweils andere Segmentbereich für die Aufnahme des nächsten Körpers bereitgestellt. Die Erhöhung der Anzahl der Segmentbereiche reduziert gemäß vorgenannter Formel den Drehwinkel $\alpha$, so dass insbesondere drei, vier, fünf, sechs oder mehr symmetrisch zur Achse A und in Umfangsrichtung gleichmäßig verteilte Segmentbereiche vorgesehen sein können. Je größer die Anzahl der Segmentbereiche, um so geringer ist der Drehwinkel $\alpha$ bzw. der Zeitaufwand für das gesamte Förderelement, um einen gewogenen Körper weiterzufördern.

Eine besonders einfache Ausführungsform der Wägestation führt die Weiterförderung in unterschiedliche Abführbereiche durch, indem die Rotation des Förderelements in eine erste Richtung den Körper in einen ersten Abführbereich fördert, während die Rotation des Förderelements in die entgegengesetzte Richtung die Weiterförderung des Körpers in einen anderen Abführbereich bewirkt. Allein durch Bestimmung der Rotationsrichtung kann daher die Weiterförderung der Körper in wenigstens zwei unterschiedliche Abführbereich realisiert werden. Mit konstruktiv einfachen Mitteln ist damit eine besonders zuverlässige und schnelle Sortierung der Körper möglich.

Eine weitere vorteilhafte Ausführungsform der Erfindung sieht vor, dass bei getrennt vom Lastaufnehmer angeordnetem Förderelement dessen Achse im Wesentlichen in bzw. parallel zur Lasteinleitungsrichtung ausgerichtet ist. Eine solche "vertikale" Anordnung des Förderelements bzw. seiner Achse verringert oder vermeidet Einflüsse auf den Lastaufnehmer, die aus seiner Rotation hervorgerufen werden könnten. Dies betrifft zum einen die bereits beschriebenen Förderkräfte, mit denen das Förderelement auf den Körper einwirkt, und die dann vorteilhaft nur senkrecht zur Lasteinleitungsrichtung wirken. Zum anderen können auch sonstige Kräfte radial zu dieser Achse das Messergebnis nicht beeinflussen. Beispielsweise kann eine Unwucht an dem Förderelement nicht in Lasteinleitungsrichtung wirken. Dadurch wird ein besonders sicheres Messergebnis gewährleistet.

Alternativ zu der getrennten Ausführung von Auflageelement und Förderelement bei im Wesentlichen vertikaler Achse bzw. Achse parallel zur Lasteinleitungsrichtung ist auch eine Ausführungsform der Erfindung zu nennen, bei der das Auflageelement einteilig mit dem Förderelement und gleichzeitig um eine vertikale Achse angeordnet ausgebildet ist. Ein einfachstes Auflageelement kann dabei in Form.einer Scheibe ausgebildet sein, die durch senkrechte Trennwände im Sinne eines aufgeteilten Kuchens in mehrere Segmentbereiche aufgeteilt wird. Diese Segmentbereiche definieren dabei Kammern, welche in radialer Richtung nach außen offen sind. Ein auf der Scheibe bzw. in der Kammer liegender Körper kann nach dem Wiegevorgang weitergefördert und dabei auch sortiert werden, indem die Scheibe um die Achse um den Winkel α rotiert wird, wodurch der darin befindliche Körper durch die Fliehkraft nach außen getrieben wird und das Auflageelement bzw. Förderelement verlässt. Je nach Drehrichtung und/oder Drehzahl kann der Körper dabei unterschiedlichen Abführbereichen zugeführt bzw. von diesen aufgefangen werden.

Für die Anordnungen des Förderelements ist zusammenfassend festzustellen, dass es separat oder einstückig mit dem Auflageelement ausgebildet sein kann. Weiterhin kann es gemeinsam mit dem Auflageelement von dem Lastaufnehmer getragen werden oder über eine separate, nicht mitgewogene Halterung vom Lastaufnehmer "entkoppelt" angeordnet sein. Sofern beide Komponenten auf dem Lastaufnehmer aufliegen, erleichtert dies die Konstruktion. Andererseits ist die zusätzliche Masse des Förderelements und seines Antriebs beim Wiegevorgang mit zu berücksichtigen. In jedem Fall ist ein "Freistellen" des zu wiegenden Körpers vorteilhaft nicht nötig. Der Körper muss also zum Wiegen nicht in einem eigenen Verfahrensschritt vom Förderelement entkoppelt werden, da eine solche Kopplung von vornherein vermieden oder unnötig wird. Entweder ruht das Förderelement ohnehin auch auf dem Lastaufnehmer (dann ist eine Entkopplung nicht nötig), oder der Körper liegt von vornherein ausschließlich auf dem Auflageelement auf (und das Förderelement beaufschlagt den Körper nur zum Weitertransportieren und idealerweise ohne Kräfte in Lasteinleitungsrichtung).

Die getrennte oder gemeinsame Aufnahme von Förderelement und Auflageelement auf dem Lastaufnehmer begünstigt die einfache Montage bzw. Demontage der einzelnen oder gemeinsamen Komponenten und erleichtert die Reinigung der gesamten Vorrichtung.

Eine weitere vorteilhafte Ausführungsform der Erfindung sieht vor, dass das Auflageelement für die schnelle Einnahme einer Ruhelage des zu wiegenden Körpers im Wesentlichen die Form eines sich nach unten verjüngenden Trichtersegments aufweist. Der Körper, der zum Wiegen in einen solchen Trichter eingebracht wird, gelangt dabei sehr schnell in den tiefsten Bereich des Trichters, wo er durch die beengten Verhältnisse schnell zur Ruhe kommt. Der Einschwingvorgang beim Wiegen wird dabei vorteilhaft verkürzt und gestattet insgesamt die Beschleunigung des Produktionsprozesses.

Bei der vorgenannten Ausführungsform entspricht der Öffnungswinkel des Trichtersegments im Wesentlichen dem Winkel, den ein Segmentbereich um die Achse definiert. Das bedeutet, dass jedes Segment gemeinsam mit der Wandung des Trichters einen Aufnahmebereich definiert, in dem der zu wiegende Körper sicher aufgenommen wird. Durch Rotation des Förderelements um den Winkel α wird der Segmentbereich relativ zum Auflageelement weggeschwenkt, so dass ein neuer Segmentbereich mit der Wandung des Trichtersegments die nächste Aufnahme für den nächsten Körper bildet. Der Körper des vorherigen Segmentbereichs gelangt erfindungsgemäß - je nach Rotationsrichtung - in einen vorgebbaren Abführbereich. Durch diese Anpassung von Förderelement und Trichtersegment wird unter optimaler Materialausnutzung und geringem Bauraum ein schneller Wiegevorgang begünstigt.

Das Förderelement kann nach einer weiteren Ausführungsform der Erfindung vorteilhaft als Schaufelrad, Flügelrad etc. ausgebildet sein, welches mit Flügeln und dazwischen angeordneten Segmentbereichen ausgestattet ist. In diesem Fall wird der gewogene Körper bei der Weiterförderung bzw. Rotation des Flügelrads von einem der Flügel seitlich beaufschlagt und von dem Auflageelement heruntergeschoben. Dies stellt eine konstruktiv besonders einfache Ausführungsform des Förderelements dar. Die Anzahl der Segmente ist über die Anzahl der Flügel definiert, die sich in radialer Richtung von der Achse nach außen erstrecken.

Als besonders vorteilhaftes Merkmal der Erfindung ist vorgesehen, dass das Auflageelement zur Format-unabhängigen Aufnahme und Abgabe auch unterschiedlich geformter Körper ausgebildet ist. Das Auflageelement, welches den zu wiegenden Körper aufnimmt, ist also erfindungsgemäß nicht an bestimmte Körperformate gebunden und kann insbesondere auch für unterschiedliche bzw. schnell wechselnde Formate verwendet werden. Es ist insbesondere nicht erforderlich, bei einer Produktionsumstellung von Tabletten auf unterschiedliche Größen besondere Vorrichtungen einzusetzen oder Umbaumaßnahmen zu treffen, um die Wägestation verwenden zu können. Unabhängig vom Format der zu wiegenden Körper ist das Auflageelement erfindungsgemäß so ausgebildet, dass unterschiedlichste Formate gleichermaßen gewogen und transportiert werden können, ohne dazu besondere Aufnahme- oder Führungsmittel vorzusehen. Dies ergibt eine besondere Flexibilität für den Einsatz der Wägestation und vermeidet Umrüstzeiten und -kosten.

Eine weitere vorteilhafte Ausführungsform der Erfindung sieht vor, dass das Förderelement zur kontinuierlichen oder quasi-kontinuierlichen Rotation in eine erste Richtung ausgebildet ist, wobei die Rotation in vorgebbaren Fällen unterbrechbar und/oder umkehrbar ist. Dabei ist standardmäßig vorgesehen, dass das Förderelement so lange die gewogenen Körper kontinuierlich einem ersten Abführbereich zuführt, so lange nicht ein dem entgegenstehendes Messergebnis ermittelt wurde. Das bedeutet, dass die Rotation des Förderelements nicht periodisch auftreten muss. Vielmehr kann das Förderelement mit weitgehend konstanter Drehzahl angetrieben werden, wobei die Körper zunächst alle dem gleichen Abführbereich zugeführt werden. Ein Beschleunigen und Abbremsen des Förderelements entfällt dabei vorteilhaft, dadurch wird weiterhin Zeit eingespart. Nur für den Fall, in dem das Wägeergebnis die Weiterförderung des gewogenen Körpers in einen anderen Abführbereich erfordert, soll das Förderelement angehalten bzw. in umgekehrter Richtung angetrieben werden, um diesen Körper getrennt weiterzufördern. Der Wiegevorgang erfolgt also erfindungsgemäß gleichzeitig mit der Rotation des Förderelements. Durch geeignete Zuführhilfen kann dabei der jeweilige Körper so dem Auflageelement zugeführt werden, dass er gewogen wird, bevor eine Begrenzung des jeweiligen Segmentbereichs (beispielsweise ein Flügel) die Weiterförderung des Körpers übernimmt. Auf diese Weise wird sichergestellt, dass der Körper frei von seitlichen oder sonstigen Kräften ausschließlich hinsichtlich seiner Gewichtskraft gemessen wird, wodurch das Messergebnis eine besondere Genauigkeit erfährt.

Für den Antrieb des Förderelements kann erfindungsgemäß insbesondere ein Schrittmotor oder ein Magnetantrieb vorgesehen sein. Ein einfacher Drehmagnet ist hier ebenso denkbar wie ein Schrittmotor, dessen Schrittwinkel dem Drehwinkel $\alpha$ entsprechen kann. Grundsätzlich ist jedoch auch jeder andere Antrieb geeignet, so lange er die vorbeschriebene Rotationsbewegung des Förderelements bewirken kann.

Zur Erfassung des Drehwinkels $\alpha$ ist nach einer vorteilhaften Ausführungsform der Erfindung wenigstens ein Sensor vorgesehen. Dabei kann es sich insbesondere um einen berührungslosen Sensor handeln, der mit einer Segmentbegrenzung des Förderelements zusammenwirkt. Typischerweise ist dies ein Flügel eines Förderelements, welches als Flügelrad ausgeführt ist. Dieser Sensor erfasst dabei die Position des Flügels und damit die Drehposition des Förderelements, so dass diese zur Steuerung der Drehbewegung im Weiteren erfasst und genutzt werden kann.

Durch geschickte Anordnung der wenigstens zwei Abführbereiche der Wägestation lässt sich eine vorteilhafte Anordnung von mehreren dieser Wägestationen bilden. Dabei werden diese so benachbart zueinander angeordnet, dass sie jeweils einen gemeinsamen Abführbereich der gleichen Art nutzen. Beispielsweise könnte eine erste Wägestation einen Gut-Bereich zur Aufnahme von gewogenen Körpern aufweisen, die ein bestimmtes Wiegekriterium erfüllen. Eine dazu benachbarte Wägestation soll erfindungsgemäß den gleichen Gut-Bereich verwenden, um die ihrerseits dafür ausgewählten Körper dort hineinzufördern. Jede dieser Wägestationen weist auf der dem Gut-Bereich abgewandten Seite analog einen Schlecht-Bereich auf, dem die anderen Körper zuzuführen sind. Diese jeweiligen Schlecht-Bereiche werden erfindungsgemäß von unmittelbar dazu benachbarten Wägestationen genutzt, so dass die Anordnung der Gut- bzw. Schlecht-Bereiche symmetrisch zueinander erfolgt.

Weitere vorteilhafte Ausführungsformen der Erfindung ergeben sich aus den Unteransprüchen.

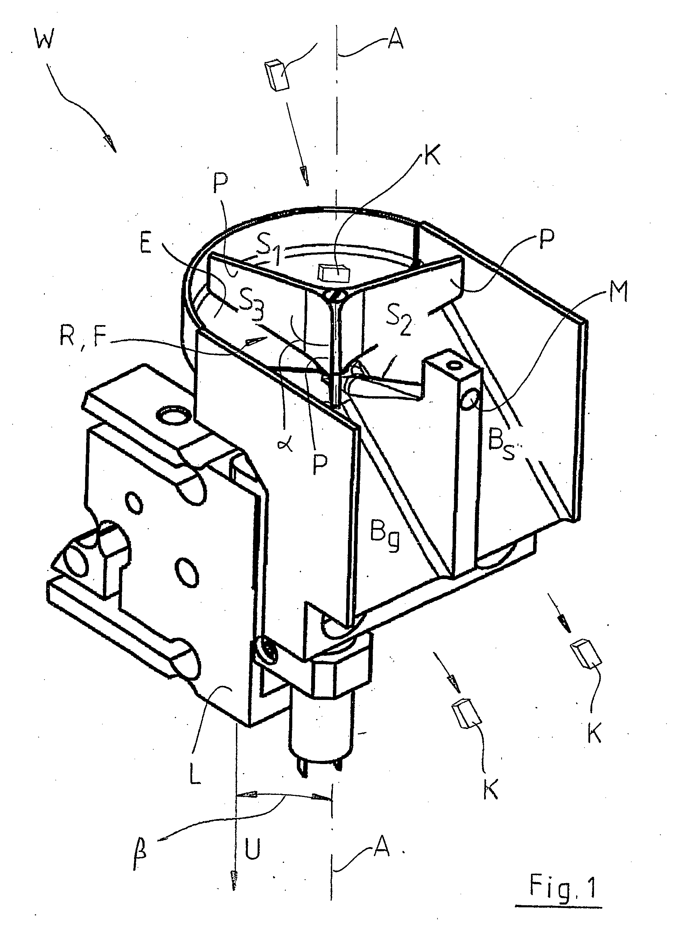

Nachfolgend wird eine Ausführungsform der Erfindung anhand eines Figurenbeispiels dargestellt. Die einzige Figur 1 zeigt eine Ausführungsform der erfindungsgemäßen Wägestation in schematischer Teilansicht.

Die Wägestation W umfasst einen Lastaufnehmer L, der zur Aufnahme eines zu wiegenden Gewichts vorgesehen ist, wobei die vorgesehene Lasteinleitungsrichtung U im dargestellten Beispiel vertikal nach unten gerichtet ist.

Auf dem Lastaufnehmer L ruht ein Auflageelement E, welches zur temporären Aufnahme während des Wiegens eines Körpers K vorgesehen ist. Das Auflageelement E hat dabei die Form eines Trichtersegments, welches an seinem oberen Rand von einer im Wesentlichen vertikalen Wandung begrenzt ist. Ein zu wiegender Körper K liegt auf dem Auflageelement E auf, so dass dessen Gewicht mitsamt dem des Auflageelements E von dem Lastaufnehmer L aufgenommen wird. Die Aufnahme kann vorteilhaft völlig unabhängig vom jeweiligen Format des Körpers erfolgen. Besondere Ausnehmungen und Führungsmittel am Auflageelement sind nicht erforderlich.

Die zu wiegenden Körper K werden dem Auflageelement E über eine nicht näher dargestellte Zufuhr zugeführt.

An dem trichterabschnittsförmigen Auflageelement E ist ein um eine Achse A rotierbares Förderelement F angeordnet. Das Förderelement F hat die Gestalt eines Flügelrads R mit drei Flügeln P. Die Flügel P sind gleichmäßig um die Achse A beabstandet, so dass der zwischen den Flügeln jeweils entstehende Segmentbereich $S_1$, $S_2$ und $S_3$ in etwa gleichgroß ausfällt. Die Achse A des Flügelrades R ist parallel ausgerichtet zur Lasteinleitungsrichtung U des Lastaufnehmers L.

Der durch die Flügel P des Flügelrads R in jedem Segment $S_1$, $S_2$ und $S_3$ aufgespannte Öffnungswinkel $\alpha$ entspricht in etwa demjenigen Öffnungswinkel des Trichterelements, welches als Auflageelement E dient. Jeweils zwei Flügel P des Flügelrads R schließen zusammen mit dem Auflageelement E eine nach oben offene Kammer ein, welche den jeweils zu wiegenden Körper K aufnimmt.

Die Flügel P des Flügelrads R überstreichen bei einer Rotation um die Achse A den Auflagebereich des Auflageelements E, so dass ein darin angeordneter Körper K durch die Flügel seitlich beaufschlagt und bewegt wird. Dabei ist das Flügelrad R erfindungsgemäß sowohl in eine als auch in die entgegengesetzte Drehrichtung um die Achse A rotierbar.

Seitlich unterhalb des trichtersegmentförmigen Auflageelements E sind zwei Abführbereiche Bg und $B_s$ angeordnet, die voneinander durch einen Mittelsteg getrennt sind. Die beiden Abführbereich sind als Rutsche ausgebildet. Je nach Drehrichtung des Flügelrades R gelangt ein in dem Auflageelement E bzw. dem jeweiligen Segmentbereich angeordneter Körper K in den ersten Abführbereich $B_g$ ("Gut-Teile") oder in den anderen Abführbereich $B_s$ ("Schlecht-Teile"). Allein durch Rotation des Flügelrads R in die eine oder andere Drehrichtung lassen sich somit die gewogenen Körper K zumindest diesen beiden Bereichen wahlweise zuführen. Über weitere, in Fig. 1 nicht dargestellte Komponenten können die Gut-Teile weiter verwendet bzw. die Schlecht-Teile aus dem Prozess abgeführt werden.

Erfindungsgemäß ist das Flügelrad R mit seinen drei Flügeln P so ausgebildet, dass bei Rotation um den Winkel $\alpha$ einerseits eine Weiterführung des jeweiligen Körpers in den einen oder anderen Abführbereich geschieht, andererseits jedoch sofort wieder ein neuer Segmentbereich S zwischen zwei Flügeln für die Aufnahme eines weiteren zu wiegenden Körpers K bereitsteht. Insbesondere kann sogar noch während der Rotationsbewegung, also solange ein Körper K dem einen oder anderen Abführbereich Bg oder $B_s$ zugeführt wird, ein weiterer zu wiegender Körper K in den sich neu ergebenden nächsten Aufnahmebereich eingebracht werden, solange aufgrund des bereits überstrichenen Drehwinkels und/oder der Form der Flügel P und des Auflageelements E sichergestellt ist, dass der neue Körper nicht unmittelbar ebenfalls in einen der beiden Abführbereiche hineingelangen kann, ohne zuvor gewogen zu werden.

Diese Anordnung erlaubt in sehr einfacher Weise das schnelle Fördern und Aussortieren von gewogenen Gütern K mit geringem mechanischen Aufwand.

Das Flügelrad R gemäß Fig. 1 ruht gemeinsam mit dem Auflageelement E auf dem Lastaufnehmer L, während die Begrenzungen der beiden Abführbereich Bg und $B_s$ nicht von diesem getragen werden.. Alternativ ist jedoch auch denkbar, die gesamte Anordnung aus Auflageelement E, Förderelement F und Auflagebereich $B_g$ bzw. $B_s$ vollständig durch den Lastaufnehmer L zu tragen, um so die Anordnung konstruktiv zu vereinfachen.

Zur Erkennung der jeweiligen Stellung des Flügelrads R bzw. seiner Flügel P ist wenigstens ein Sensor M vorgesehen, der die Stellung der Flügel des Flügelrads berührungslos erfasst und für die Steuerung der Rotation des Flügelrads in Signalform weiterleitet. Selbstverständlich lässt sich die Drehposition des Flügelrads alternativ auch im Bereich des Antriebs oder an sonstiger geeigneter Stelle erfassen.

Die Ausführung gemäß Fig. 1 erlaubt erfindungsgemäß die Verwendung von Förderelementen mit mehr als drei Flügeln. Deren Anzahl ist allein von den sonstigen Förderbedingungen abhängig.

**Patentansprüche**

1. Wägestation (W) zum Wiegen und Sortieren von zu wiegenden Körper (K), insbesondere Tabletten,

   a) mit einem Lastaufnehmer (L) zur Erfassung einer in einer Lasteinleitungsrichtung (U) aufzubringenden Gewichtskraft, und

   b) mit einem von dem Lastaufnehmer (L) einer Wägezelle getragenen Auflageelement (E) zur temporären Aufnahme und zum Wiegen wenigstens eines Körpers (K), und

   c) mit einem um eine Achse (A) rotierbaren Förderelement (F) zur Weiterförderung des wenigstens einen Körpers (K) während und/oder nach dem Wiegevorgang,

   d) wobei das Förderelement (F) eine Anzahl (n) um seine Achse (A) herum angeordnete Segmentbereiche ($S_1$, $S_2$, $S_3$...$S_n$) so aufweist, dass der zu wiegende Körper (K) beim Wiegen in einem Segmentbereich ($S_1$, $S_2$, $S_3$...$S_n$) zu liegen kommt, und wobei

   e) das Förderelement (F) zur Weiterförderung des wenigstens einen Körpers (K) in einem Förderschritt um einen jeweils vorgebbaren Drehwinkel ($\alpha$) um seine Achse (A) rotierbar ist.

   **dadurch gekennzeichnet, dass**

   f) die Achse (A) des Förderelements (F) mit der Lasteinleitungsrichtung (U) einen Winkel ($\beta$) < 90° einschließt, und dass das Förderelement (F) zur Sortierung ausgebildet ist, indem es den Körper (K) bei der Weiterförderung durch das Förderelement (F) wahlweise in wenigstens zwei verschiedene Abführbereiche ($B_g$, $B_s$) fördert.

**2.** Wägestation (W) nach Anspruch 1, **dadurch gekennzeichnet, dass** die Achse (A) des Förderelements (F) parallel zur Lasteinleitungsrichtung (U) angeordnet ist.

**3.** Wägestation (W) nach einem der vorigen Ansprüche, **dadurch gekennzeichnet, dass** ein Segmentbereich ($S_1$, $S_2$, $S_3$...$S_n$) des Förderelements (F) bei der Weiter-förderung den Bereich des Auflageelements (E), in dem der zu wiegende Körper (K) aufliegt, überstreicht.

**4.** Wägestation (W) nach einem der vorigen Ansprüche, **dadurch gekennzeichnet, dass** die Segmentbereiche des Förderelements (F) so um die Achse (A) angeordnet sind, dass nach einem erfolgten Förderschritt ein anderer, vorzugsweise ein benachbarter Segmentbereich zur Weiterförderung des nächsten Körpers (K) bereitsteht.

**5.** Wägestation (W) nach einem der vorigen Ansprüche, **dadurch gekennzeichnet, dass** die Segmentbereiche ($S_1$, $S_2$, $S_3$...$S_n$) gleichmäßig um die Achse (A) angeordnet sind und der Drehwinkel ($\alpha$) der Bedingung ($\alpha$) = 360° / n genügt.

**6.** Wägestation (W) nach dem vorhergehenden Anspruch, **dadurch gekennzeichnet, dass** die Auswahl des Abführbereiches ($B_g$, $B_s$) durch die Drehzahl des Förderelements (F) bestimmbar ist.

**7.** Wägestation (W) nach Anspruch 1, **dadurch gekennzeichnet, dass** die Weiterförderung in den ersten Abfuhrbereich ($B_g$) durch Rotation des Förderelements (F) um seine Achse (A) in eine erste Drehrichtung bestimmbar ist, während die Weiterförderung in den zweiten Abfuhrbereich ($B_s$) durch Rotation des Förderelements (F) in die entgegegengesetzte Drehrichtung bestimmbar ist.

**8.** Wägestation (W) nach einem der vorhergehenden Ansprüche, **dadurch gekennzeichnet, dass** das Auflageelement (E) für die schnelle Einnahme einer Ruhelage des zu wiegenden Körpers (K) im Wesentlichen die Form eines sich nach unten verjüngenden Trichtersegments aufweist.

**9.** Wägestation (W) nach dem vorhergehenden Anspruch, **dadurch gekennzeichnet, dass** der Öffnungswinkel des Trichtersegments im Wesentlichen dem Winkel entspricht, der einen Segmentbereichs ($S_1$, $S_2$, $S_3$...$S_n$) um die Achse (A) definiert.

**10.** Wägestation (W) nach einem der vorhergehenden Ansprüche, **dadurch gekennzeichnet, dass** das Förderelement (F) als Flügelrad (R) mit Flügeln (P) und dazwischen angeordneten Segmentbereichen ($S_1$, $S_2$, $S_3$...$S_n$) so ausgebildet ist, dass der gewogene Körper (K) zur Weiterförderung bei der Rotation des Flügelrades (R) von einem Flügel (P) seitlich beaufschlagbar und von dem Auflageelement (E) herunterschiebbar ist.

**11.** Wägestation (W) nach einem der vorhergehenden Ansprüche, **dadurch gekennzeichnet, dass** das Förderelement (F) und dessen Antrieb zusammen mit dem Auflageelement (E) von dem Lastaufnehmer (L) der Wägezelle getragen werden.

**12.** Wägestation (W) nach einem der vorhergehenden Ansprüche, **dadurch gekennzeichnet, dass** das Auflageelement (L) zur formatunabhängigen Aufnahme und Abgabe unterschiedlich geformter Körper (K) ausgebildet ist.

**13.** Wägestation (W) nach einem der vorhergehenden Ansprüche, **dadurch gekennzeichnet, dass** das Förderelement (F) zur kontinuierlichen oder quasikontinuierlichen Rotation in eine erste Richtung ausgebildet ist, wobei die Rotation in vorgebbaren Fällen unterbrechbar und/oder umkehrbar ist.

**14.** Wägestation (W) nach einem der vorigen Ansprüche, **dadurch gekennzeichnet, dass** das Förderelement (F) mittels eines Schrittmotors oder eines Magnetantriebes antreibbar ist.

**15.** Wägestation (W) nach einem der vorigen Ansprüche, **dadurch gekennzeichnet, dass** zur Erfassung des Drehwinkels ($\alpha$) wenigstens ein, vorzugsweise berüh-rungsloser, Sensor (M) vorgesehen ist.

**16.** Anordnung von Wägestationen nach einem der vorigen Ansprüche, wobei die zu wiegenden Körper (K) jeder Wägestation (W) in wenigstens zwei verschiedene Abführbereiche ($B_g$, $B_s$) förderbar sind, **dadurch gekennzeichnet, dass** die Abführbereiche ($B_g$, $B_s$) gleicher Art an benachbarten Wägestationen jeweils einen gemeinsamen Abführbereich ($B_g$, $B_s$) nutzen.

**Claims**

**1.** A weighing station (W) for weighing and sorting bodies (K) to be weighed, in particular tablets,

     a) having a load-receiver (L) for detecting a force due to weight that is to be applied in a load-introducing direction (U), and
     b) having a support element (E) borne by the load-receiver (L) of a weighing cell for temporarily receiving and for weighing at least one body (K), and
     c) having a conveying element (F) that can be rotated about an axis (A) for further conveyance of the at least one body (K) during and/or after the weighing process,

d) wherein the conveying element (F) has a number (n) of segment regions ($S_1$, $S_2$, $S_3$...$S_n$) arranged about its axis (A) in such a way that the body (K) to be weighed comes to lie in a segment region ($S_1$, $S_2$, $S_3$...$S_n$) during the weighing, and wherein

e) the conveying element (F) for further conveyance of the at least one body (K) can be rotated about its axis (A), in a conveying step, by an angle of rotation ($\alpha$) that can be predetermined in each case,

**characterised in that**

f) the axis (A) of the conveying element (F) encloses with the load-introducing direction (U) an angle ($\beta$) < 90°, and the conveying element (F) is configured for sorting purposes **in that** it conveys the body (K) during the further conveyance by the conveying element (F) selectively into at least two different discharge regions ($B_g$, $B_s$).

2. A weighing station (W) according to claim 1, **characterised in that** the axis (A) of the conveying element (F) is arranged so as to be parallel to the load-introducing direction (U).

3. A weighing station (W) according to one of the previous claims, **characterised in that** during the further conveyance a segment region ($S_1$, $S_2$, $S_3$...$S_n$) of the conveying element (F) sweeps over the region of the support element (E) in which the body (K) that is to be weighed is lying.

4. A weighing station (W) according to one of the previous claims, **characterised in that** the segment regions of the conveying element (F) are arranged about the axis (A) in such a way that after a conveying step has been effected another segment region, preferably an adjacent segment region, is available for further conveyance of the next body (K).

5. A weighing station (W) according to one of the previous claims, **characterised in that** the segment regions ($S_1$, $S_2$, $S_3$...$S_n$) are arranged uniformly about the axis (A), and the angle of rotation ($\alpha$) satisfies the condition ($\alpha$)=360°/n.

6. A weighing station (W) according to the preceding claim, **characterised in that** the selection of the discharge region ($B_g$, $B_s$) can be determined by the rotational speed of the conveying element (F).

7. A weighing station (W) according to claim 1, **characterised in that** the further conveyance into the first discharge region ($B_g$) can be determined by rotation of the conveying element (F) about its axis (A) in a first direction of rotation, whilst the further conveyance into the second discharge region ($B_s$) can be determined by rotation of the conveying element (F) in the opposite direction of rotation.

8. A weighing station (W) according to one of the preceding claims, **characterised in that** the support element (E) has substantially the form of a downwardly tapering funnel segment to allow the body (K) that is to be weighed to take up a position of rest rapidly.

9. A weighing station (W) according to the preceding claim, **characterised in that** the opening angle of the funnel segment substantially corresponds to the angle that defines a segment region ($S_1$, $S_2$, $S_3$...$S_n$) about the axis (A).

10. A weighing station (W) according to one of the preceding claims, **characterised in that** the conveying element (F) is configured as a blade-type wheel (R) with blades (P) and segment regions ($S_1$, $S_2$, $S_3$...$S_n$) arranged in between in such a way that a blade (P) can act laterally upon the weighed body (K) for the purposes of further conveyance when the blade-type wheel (R) rotates, and the weighed body (K) can be pushed down from the support element (E).

11. A weighing station (W) according to one of the preceding claims, **characterised in that** the conveying element (F) and its drive together with the support element (E) are borne by the load-receiver (L) of the weighing cell.

12. A weighing station (W) according to one of the preceding claims, **characterised in that** the support element (L) is configured to receive and deliver, irrespective of format, differently formed bodies (K).

13. A weighing station (W) according to one of the preceding claims, **characterised in that** the conveying element (F) is configured for continuous or quasi-continuous rotation in a first direction, wherein the rotation can be interrupted and/or reversed in predeterminable cases.

14. A weighing station (W) according to one of the previous claims, **characterised in that** the conveying element (F) can be driven by means of a stepping motor or a magnetic drive.

15. A weighing station (W) according to one of the previous claims, **characterised in that** at least one, preferably contactless, sensor (M) is provided to detect the angle of rotation ($\alpha$).

16. An arrangement of weighing stations according to one of the previous claims, wherein the bodies (K) to be weighed and pertaining to each weighing station (W) can be conveyed into at least two different discharge regions (B$_g$, B$_s$), **characterised in that** the discharge regions (B$_g$, B$_s$) of the same kind at adjacent weighing stations in each case use a common discharge region (B$_g$, B$_s$).

## Revendications

1. Poste de pesage (W) pour peser et trier des corps (K) à peser, en particulier des comprimés,

   a) comportant un récepteur de charge (L) pour l'enregistrement d'un poids à appliquer dans une direction d'introduction de la charge (U), et
   b) comportant un élément de pose (E), qui est porté par le récepteur de charge (L) d'une cellule de pesée et qui est destiné à recevoir temporairement au moins un corps (K) et à peser celui-ci, et
   c) comportant un élément de transport (F) apte à tourner autour d'un axe (A), destiné à transporter ledit au moins un corps (K) pendant et/ou après le processus de pesée,
   d) ledit élément de transport (F) comportant un nombre (n) de zones segmentaires (S$_1$, S$_2$, S$_3$ ... S$_n$) disposées autour de son axe (A), de telle sorte que le corps (K) à peser vient se poser dans une zone segmentaire (S$_1$, S$_2$, S$_3$ ... S$_n$) au moment de la pesée, et
   e) ledit élément de transport (F) pour le transport dudit au moins un corps (K) étant apte à tourner, en une étape de transport, autour de son axe (A) selon un angle de rotation ($\alpha$) prédéfinissable dans chaque cas,
   **caractérisé en ce que**
   f) l'axe (A) de l'élément de transport (F) forme avec la direction d'introduction de la charge (U) un angle (ß) < 90°, et **en ce que** l'élément de transport (F) est conçu pour le tri, du fait que, pendant le transport du corps (K) par l'élément de transport (F), il transporte ledit corps au choix dans au moins deux zones d'évacuation (B$_g$, B$_S$) différentes.

2. Poste de pesage (W) selon la revendication 1, **caractérisé en ce que** l'axe (A) de l'élément de transport (F) est disposé parallèlement à la direction d'introduction de la charge (U).

3. Poste de pesage (W) selon l'une quelconque des revendications précédentes, **caractérisé en ce qu'**une zone segmentaire (S$_1$, S$_2$, S$_3$ ... S$_n$) de l'élément de transport (F) passe lors du transport au-dessus de la zone de l'élément de pose (E), dans laquelle est posé le corps (K) à peser.

4. Poste de pesage (W) selon l'une quelconque des revendications précédentes, **caractérisé en ce que** les zones segmentaires de l'élément de transport (F) sont disposées autour de l'axe (A) de telle sorte qu'à la fin d'une étape de transport, une autre zone segmentaire, de préférence une zone segmentaire adjacente, est disponible pour le transport du corps (K) suivant.

5. Poste de pesage (W) selon l'une quelconque des revendications précédentes, **caractérisé en ce que** les zones segmentaires (S$_1$, S$_2$, S$_3$ ... S$_n$) sont disposées de manière régulière autour de l'axe (A), et l'angle de rotation ($\alpha$) satisfait à la condition ($\alpha$) = 360°/n.

6. Poste de pesage (W) selon la revendication précédente, **caractérisé en ce que** la sélection de la zone d'évacuation (B$_g$, B$_S$) peut être déterminée par le nombre de rotations de l'élément de transport (F).

7. Poste de pesage (W) selon la revendication 1, **caractérisé en ce que** le transport vers la première zone d'évacuation (B$_g$) peut être déterminé par la rotation de l'élément de transport (F) autour de son axe (A) dans un premier sens de rotation, alors que le transport vers la deuxième zone d'évacuation (B$_S$) peut être déterminé par la rotation de l'élément de transport (F) dans le sens de rotation opposé.

8. Poste de pesage (W) selon l'une quelconque des revendications précédentes, **caractérisé en ce que**, pour amener rapidement le corps (K) à peser dans une position de repos, l'élément de pose (E) présente sensiblement la forme d'un segment conique se rétrécissant vers le bas.

9. Poste de pesage (W) selon la revendication précédente, **caractérisé en ce que** l'angle d'ouverture du segment conique correspond sensiblement à l'angle qui définit une zone segmentaire (S$_1$, S$_2$, S$_3$ ... S$_n$) autour de l'axe (A).

10. Poste de pesage (W) selon l'une quelconque des revendications précédentes, **caractérisé en ce que** l'élément de transport (F) est conçu sous forme de roue à ailettes (R) avec des ailettes (P) et des zones segmentaires (S$_1$, S$_2$, S$_3$ ... S$_n$) disposées entre celles-ci, de telle sorte que, pour le transport, le corps (K) pesé peut être sollicité latéralement par une ailette (P) lors de la rotation de la roue à ailettes (R) et peut glisser pour quitter l'élément de pose (E).

11. Poste de pesage (W) selon l'une quelconque des revendications précédentes, **caractérisé en ce que** l'élément de transport (F) et son entraînement sont portés, conjointement avec l'élément de pose (E), par le récepteur de charge (L) de la cellule de pesée.

12. Poste de pesage (W) selon l'une quelconque des revendications précédentes, **caractérisé en ce que** l'élément de pose (L) est conçu pour recevoir et évacuer, quel que soit leur format, des corps (K) de forme différente.

13. Poste de pesage (W) selon l'une quelconque des revendications précédentes, **caractérisé en ce que** l'élément de transport (F) est conçu pour tourner en continu ou quasiment en continu dans un premier sens de rotation, la rotation pouvant être interrompue et/ou inversée dans des cas prédéfinis.

14. Poste de pesage (W) selon l'une quelconque des revendications précédentes, **caractérisé en ce que** l'élément de transport (F) peut être actionné par un moteur pas à pas ou un entraînement magnétique.

15. Poste de pesage (W) selon l'une quelconque des revendications précédentes, **caractérisé en ce que**, pour détecter l'angle de rotation ($\alpha$), il est prévu au moins un capteur (M), de préférence sans contact.

16. Ensemble de postes de pesage selon l'une quelconque des revendications précédentes, les corps (K) à peser de chaque poste de pesage (W) pouvant être transportés dans au moins deux zones d'évacuation ($B_g$, $B_S$) différentes, **caractérisé en ce que** les zones d'évacuation ($B_g$, $B_S$) de même type sur des postes de pesage adjacents utilisent dans chaque cas une zone d'évacuation ($B_g$, $B_S$) commune.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19819395 C1
- DE 4419488 A1
- DE 69720886 T1
- US 6877611 B
- JP 3282221 A
- EP 0501208 B1
- FR 2147983
- FR 2410262